# EUROPEAN PATENT APPLICATION

(11) **EP 1 180 625 A1**
(43) Date of publication of application: **20.02.2002**
(21) Application number: 00202785.2
(22) Date of filing: 07.08.2000
(51) Int. Cl.: F16K 3/06, F16K 11/074, B65H 3/08

(54) **Pivoting gate valve**

(71) Applicant: DICON A/S, 8520 Lystrup (DK)
(72) Inventor: Raahauge, Niels Kim, 8543 Hornslet (DK)
(74) Representative: Elmeros, Claus

(57) **Abstract**

A valve consisting of a first part (14) comprising at least one plane surface with one or more transverse openings (17) and a second part (10) comprising at least one plane surface with one or more transverse openings (12a,b), where the plane surfaces of the first and second parts are facing each other and are in contact while at least the first part being capable or moving and where the movement of the first part in relation to the second part takes place by an essentially mutually parallel movement between the surfaces and where an opening in the first part may be placed directly over an opening in the second part.

## Description

### Background of the invention

The invention relates to a valve, a series of valves and use of one or more valves.

Today, the application of valves is widely used for a variety of purposes when it is necessary to control a flow. One characteristic of these known valves is that they comprise a housing encompassing a movable unit. When moved, the movable unit may change from a position allowing for passing of the flow through the housing to a position shutting such passing off.

A problem associated with these known valves is that they require quite detailed and comprehensive processing when manufactured. This is both time- and material-consuming, thus making the valves overly expensive to manufacture and use in many instances.

Also, when in use, the valves are exposed to mechanical wear and tear which cannot be prevented or fixed due to their complicated and integrated construction which means that the valve or some accessory gasket will quite often require a replacement. Such replacement often calls for assistance by a qualified person or repair man which means that the machinery will have to be brought to a halt, depending on the valve in question, for a while until the repair man arrives and fixes the problem. This often results in a financial loss due to lack of production by the machinery in question and other machinery in dependency thereof.

### The invention

By letting, as specified in claim 1, a valve comprising a first part comprising at least one plane surface with one or more transverse openings, a second part comprising at least one plane surface with one or more transverse openings, wherein the plane surfaces of said first and second parts are facing each other and are in contact while at least said first part is movable, and wherein the movement of said first part in relation to said second part takes place by an essentially mutually parallel movement between the surfaces, and wherein an opening in the first part may be placed directly over at least one opening in said second part, it is possible to create a valve simple in its construction and easy to adjust with respect to the surfaces. Thus, the valve would be inexpensive to manufacture.

In addition, the construction with the essentially parallel surfaces makes it possible to obtain reliability in operation which is not known from the existing valve technique. This is due to the fact that long-time use will result in wear and tear of the parallel surfaces and consequently in a certain distance between such surfaces. However, this may easily be compensated for by adjusting the surfaces in such a manner that they are brought back close together by e.g. making one of the surfaces spring-loaded. Another possibility is to ensure that the movable part engages with an angular surface in such a manner that the two surfaces contract against each other.

Similarly, if the surfaces have become too rough, it is quite easy to separate the two parts from each other and subsequently grind the surfaces until they are plane again.

By, as specified in claim 2, letting the openings in said first part and said second part each being provided with a connecting branch for connection with a hose, an easy and flexible way of connecting a valve with the surroundings has been obtained.

By, as specified in claim 3, letting one or more of said hoses from either said first or the second part being connected with a vacuum source, it is possible to manufacture an apparatus that may control suction to different openings of the valve or remove it entirely therefrom. At the same time, it is possible to obtain an advantageous compression of the first and second parts by moving the first part as this part will adhere to the second part because of the vacuum source. In this manner, it is possible to avoid leaks between the first and the second parts during movement. In order to further improve the imperviousness, the parts may be wedged together by the movement.

It is also possible to connect the vacuum source directly with one or more of the connecting branches or openings.

Furthermore, the valve may be used to control other fluids under pressure such as water or oil. However, due to the construction of the valve, such fluids may require additional imperviousness that than which is obtained by means of the vacuum like e.g. rubber edges or the like.

By, as specified in claim 4, letting one or more of said hoses from either said first or said second part being connected with a pressure source, an advantageous embodiment of the invention has been obtained.

By using the valve together with a pressure source, it is possible to regulate the inflow of e.g. pressurised air to a user installation in a simple manner. By using a pressure source, both parts of the valve will be pressed away from each other when moving the first part which causes a certain drop in the pressurised air until the openings in the parts are back in a position directly over each other which will once again limit the drop. The drop caused by the movement will be insignificant in relation to most applications.

As far as the movement of the first part is concerned, the pressure generated by the pressurised air will ease the movement which means that the requirement to the amount of power provided by an electric motor is significantly reduced.

By, as specified in claim 5, letting at least one of said first or second parts being provided with at least one means of operation, an advantageous embodiment of the invention has been obtained.

When using a basic valve without a means of operation, it is possible to change the position of the valve by manually pressing the first or the second part. However, in most situations, it will be appropriate to automate the control of the valve which necessitates some kind of means of operation. The means of operation may be featured by various kinds of energy sources and have many different embodiments. Advantageous sources of energy include e.g. vacuum, pressurised air or electricity.

By, as specified in claim 6, letting at least one of said means of operation constituting a spring, it is possible to obtain an advantageous embodiment of the invention from an environmental point of view. The valve has a means of operation, e.g. of the above-mentioned kind, initiating movement of the first part to a desired position. Once the energy source is removed from the means of operation, the spring will cause the first part to swing back to its original position. The spring may advantageously be a flat spring in order to create the necessary force but all kinds of springs may generally be used.

By, as specified in claim 7, letting at least one of said means of operation constituting an electric motor, it is possible to improve the control of the movement of the first part. The electric motor may e.g. be a stepping motor in order to create a valve with no need for limit switches or various kinds of control slots. On the other hand, a means of operation may consist of a standard electric motor combined with a limit switch where control of the motor takes place indirectly by monitoring the motor current or directly by monitoring the limit switches.

By, as specified in claim 8, letting an axle connecting said first part with said means of operation mounted onto said second part, it is possible to manufacture a compact and robust valve.

By, as specified in claim 9, letting at least said first part being capable of making a partial or full circular movement around an axis, it is possible to design a valve with a simple construction in relation to the means of operation and control. A construction where the first part makes a linear movement is naturally also possible by means of e.g. at least two toothed wheels, one on each side of the first part. One toothed wheel may be connected to a means of operation with which the teeth of the wheel may transfer power to the first part through its corresponding teeth at the edge.

In addition, it is possible to use a toothed wheel and a toothed bar or ring. It is also possible to create the linear movement by coiling of a wire, cord or the like which is connected to the first part at the front and the back.

By, as specified in claim 10, letting said first part and said second part being provided with control means for control of the direction of movement and distance, it is possible to obtain easy control of the valve while also improving the reliability of operation since the movements of the valve are limited.

By, as specified in claim 11, said first part being provided with a control slot and said second part with a pivot extending into said control slot or by the first part being provided with a pivot extending into the control slot of the second part, an advantageous manner of movement control of the first part has been created. It will be simple to subsequently detect the time at which the pivot reaches the end of the control slot by e.g. making an indirect measurement of the means of operation.

In this connection, it is important to point out that the control slot may also be mounted in the second part while the pivot is placed in the first part. This has the advantage that the momentum of the motor through the point of the pivot may be symmetrical limiting the twist of the valve significantly.

By, as specified in claim 12, letting said pivot being provided with a captive head, it is possible to increase the capturing of the first part against the second part. In this manner, the strain on e.g. an axle connecting the first part and a means of operation with the second part is reduced. Also, it will be possible to mount a spring between the captive head and the part in order to bias the two parts against each other.

However, a pivot provided with a captive head is not the only option available to obtain this effect. It is also possible to create this effect by use of a magnet, a collar on the motor axle etc. At the same time, the collar may be mounted by a spring in order to keep the two surfaces together, as already mentioned above.

By, as specified in claim 13, letting one part having a width of at least that corresponding to the distance between the two openings plus the diameter of these openings, it is possible to close both openings in the second part by moving the first part. In this manner, intake of "false air" through one of the openings is prevented as the distance between the openings in the second part are larger than the diameter of the opening in the first part.

One particular advantage of this is that a source, such as a pump in a vacuum source, will not draw in "false air" and be exposed to unnecessary strain during changes of position. The transfer from one position to another may also be in a smooth movement so that suction disappears slowly from one user installation and is built up slowly at the other in an advantageous manner.

### Drawings

The invention will be described in detail in the following with reference to the drawings of which
- Fig. 1: shows a first embodiment of a valve according to the invention,
- Fig. 2: shows a second embodiment of a valve according to the invention,
- Fig. 3: shows a third embodiment of a valve according to the invention,
- Fig. 4: shows the feasibility of a series of valves according to the invention which have been connected with a vacuum or pressure source,
- Fig. 5: shows the feasibility in fig. 4 from a different angle with the addition of motor control,
- Fig. 6: shows an embodiment of a valve according to the invention with additional captive means, and
- Fig. 7: shows the embodiment from fig. 6 from a different angle.

### Detailed description

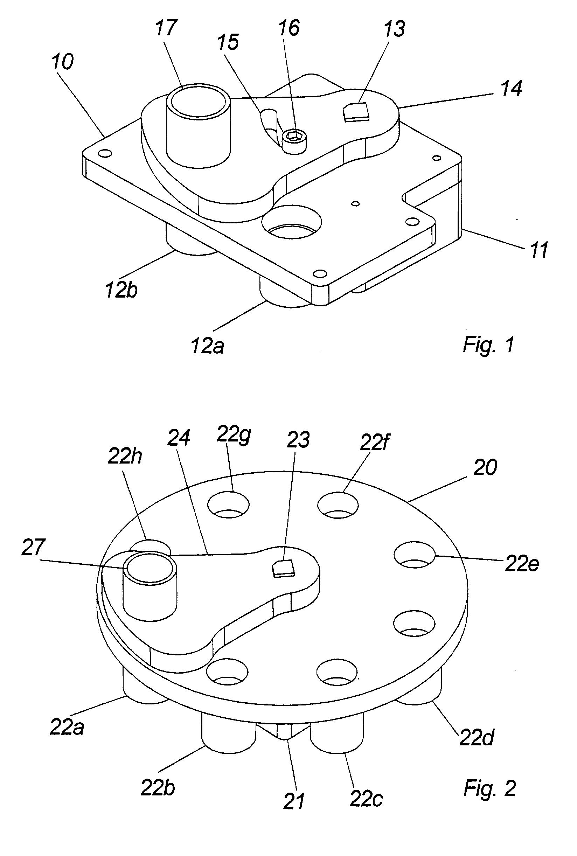

Figure 1 shows a possible embodiment of the invention comprising a fixed plate 10, a motor 11 and a movable part such as an adjustable arm 14.

The fixed plate 10 has two openings with connecting branches 12a, 12b for attachment of hoses, wires or pipes.

The motor 11 is mounted under the fixed plate 10. The rotation axle 13 of the motor is connected with the adjustable arm 14.

The adjustable arm has an opening with a connecting branch 17 in which a hose, a wire or a pipe may be mounted. The adjustable arm has a control slot 15 in which a pivot 16 is sliding.

Figure 1 shows the adjustable arm in a position to one side whereby the opening of the adjustable arm 17 fits over the fixed opening 12b. Thus, the passage from a hose mounted onto 17 to a hose mounted onto 12b is unhindered.

If the motor 11 is started and runs in one direction, it will attempt to swing the adjustable arm 14 over the edge of the fixed plate 10 which is prevented by the pivot 16. If the motor 11 runs in the other direction, it will actuate the adjustable arm 14 which will swing around the rotation axle 13 until the other end of the control slot 15 meets the pivot 16. The opening of the adjustable arm 17 will now be directly over the connecting branch 12a of the first plate and allow unhindered passage from a hose mounted onto 17 to a hose mounted onto 12a.

If e.g. a hose with vacuum is connected with the connecting branch 17, the valve may determine the connecting branch 12a, 12b, through which suction may take place.

The connections and the parts of the valves may be provided with threads individually so that they may be bolted together. It is also possible to use solutions involving glue, soldering, welding and force fits between the individual parts. Correspondingly, other known methods of joining may be used if commonly known to person skilled in the art.

Figure 2 shows another possible embodiment of the invention. It comprises a fixed circular plate 20, a motor 21 and an adjustable arm 24.

In this embodiment, the fixed plate has eight openings with connecting branches 22a-22h, onto which hoses, wires and pipes may be mounted.

In this embodiment, the motor 21 is a stepping motor and is mounted under the fixed plate 20. The rotation axle 23 of the motor is connected with the adjustable arm 24. An alternative to a stepping motor is a motor with an encoder or another unit capable of providing position identification.

The adjustable arm has an opening with a connecting branch 27 onto which a hose, wire or pipe may be mounted.

In the figure, the adjustable arm is swung in such a manner that the opening 27 of the adjustable arm 24 is directly over the opening 22a in the fixed plate 20. The passage from a hose mounted onto the opening 27 to a hose mounted onto 22a will be unhindered.

With the motor 21, the adjustable arm 24 may be swung around in eight positions, thereby placing the opening 27 of the adjustable arm 24 over a randomly chosen opening 22a-22h in the fixed plate 20 and allow unhindered passage from a hose mounted onto the opening 27 to a hose mounted onto the chosen opening 22a-22h.

If e.g. a hose with vacuum is mounted onto the opening 27 of the adjustable arm 24, the valve may determine which one of the eight openings 22a-22h in the fixed plate is granted access to this vacuum.

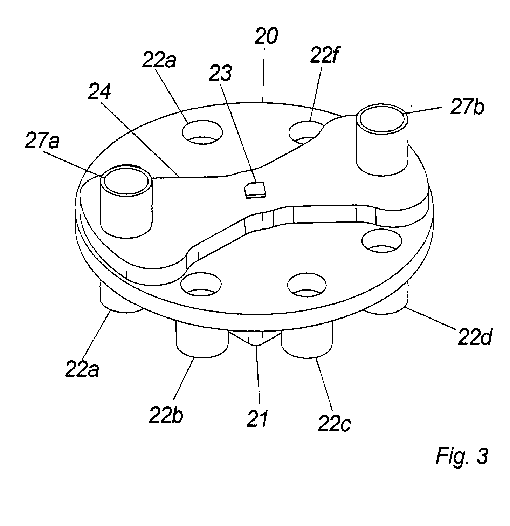

Figure 3 shows a third possible embodiment of the invention. In relation to figure 2, only the adjustable arm 28 has been changed. The circular plate 20 with eight openings with the connecting branches 22a-22h remains unchanged. The openings 22e and 22h have been hidden behind the adjustable arm in figure 3.

The stepping motor 21 also remains mounted under the fixed plate 20 with a rotation axle 23 connected with the adjustable arm 28.

In this embodiment, the adjustable arm 28 has two openings with connecting branches 27a, 27b mounted in such a manner that they both fit over two opposite openings in the fixed plate 20. If e.g. opening 27a of the adjustable arm 28 is directly over opening 22a in the fixed plate, opening 27b of the adjustable arm 28 will be directly over opening 22e in the fixed plate 20.

In this manner, passage will be unhindered from a hose mounted onto opening 27a to a hose mounted onto any of the openings 22a-22h and from a hose mounted onto opening 27b to the opening 22a-22h opposite of the chosen opening.

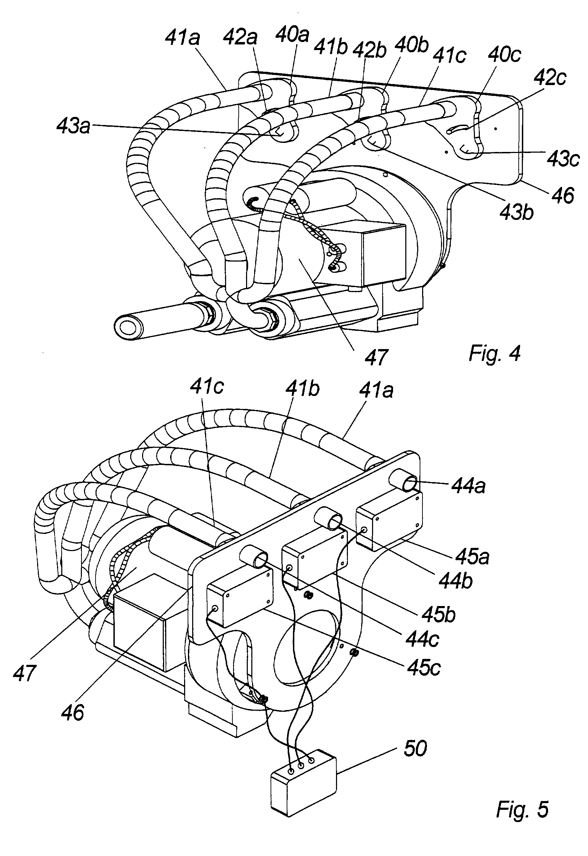

Figures 4 and 5 show the feasibility of the invention.

It consists of a vacuum source such as a vacuum generator 47. A fixed plate 46 has been mounted onto the vacuum generator 47.

Mounted onto the fixed plate 46 are three adjustable arms 40a-40c, three motors 45a-45c and three openings with connecting branches 44a-44c.

Each motor 45a-45c has a rotation axle 43a-43c connected with an adjustable arm 40a-40c.

Each adjustable arm 40a-40c has a control slot with a pivot 42a-42c. Furthermore, each adjustable arm 40a-40c is provided with an opening onto which a hose 41a-41c is mounted.

The hoses 41a-41c have been connected with the vacuum generator 47.

The openings with the hoses 41a-41c fit over the openings of the fixed plate 46. Thus, passage is unhindered through hose 41a to a hose mounted onto opening 44a and, thus, the hose mounted onto opening 44a is in a vacuum. This situation applies to hoses 41b, 41c and openings 44b, 44c as well.

With the adjustable arms 40a-40c that may be swung with the motors 45a-45c, the openings onto which the hoses 41a-41c have been mounted may be swung away from the openings 44a-44c whereby the passage is closed.

Each adjustable arm 40a-40c follows a certain pattern depending on the control slots and the pivots 42a-42c. The pivots have been placed in such a manner that the adjustable arm 40a-40c, when swung as far as possible to one side, will completely close the passage from the hose 41a-41c to the opening 44a-44c and, when swung as far as possible to the other side, will provide unhindered passage.

Each adjustable arm 40a-40c may be swung independently of the others as they are provided with one motor 45a-45c each. Thus, the passage from the hoses 41a-41c to the openings 44a-44c may be controlled individually.

In figure 5, a motor control unit 50 has been added. It is connected with the motors 45a-45c by means of wires. The motor control unit 50 may preferably be connected with a computer or another superior control unit. The motor control unit 50 ensures that the motors 45a-45c are started and turned off at the right times.

In order to spare the motors 45a-45c and save electricity, the motor control unit 50 can measure the current through the individual motors in one simple operation so that they are brought to a stop when the current increases drastically which means that the pivot has reached the end of the control slot.

In another embodiment, the motor control unit 50 may let the motor 45a-45c, whose adjustable arm 40a-40c is to be swung, run for a certain period of time such as five seconds after which it is estimated that the pivot has reached the end of the control slot.

The motor control unit 50 may e.g. be operated by means of a control panel directly connected with the unit. On this panel, the position changing intervals of the valves may be programmed. The motor control unit 50 may also be controlled by a computer or another control unit. The connection may e.g. be flat cables, wires or networks.

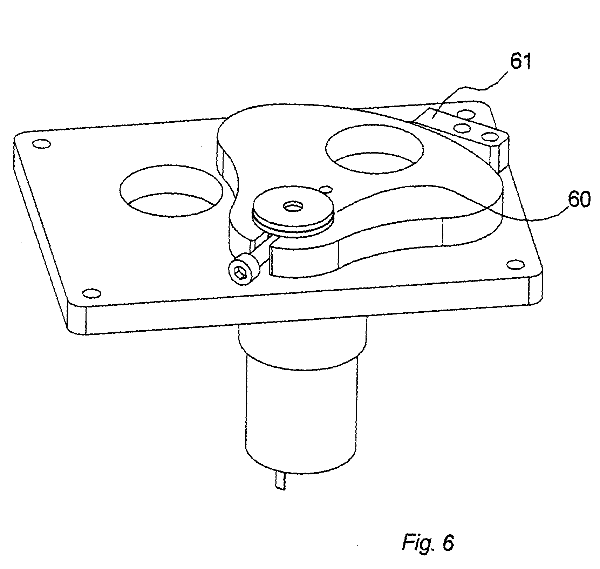

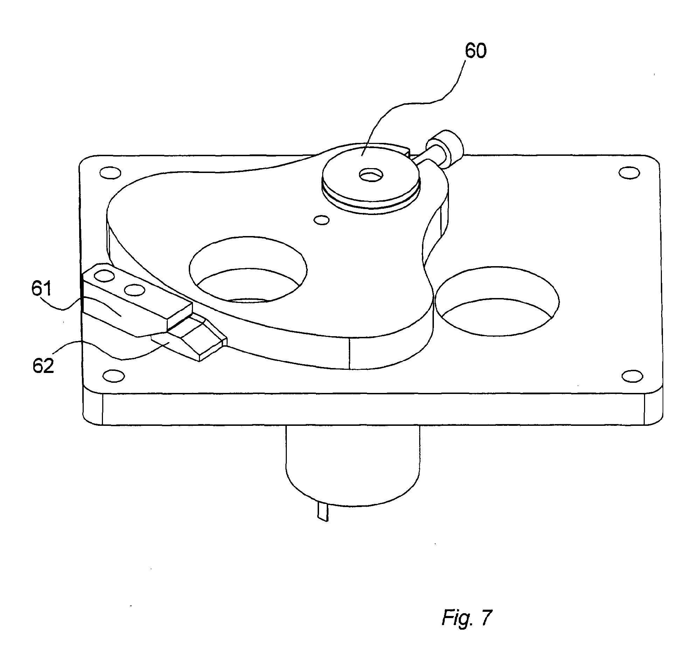

Figures 6 and 7 show yet another embodiment of the valve. Again, the valve consists of fixed plate 10, a motor 11 and a movable part such as an adjustable arm 14.

The motor 11 is mounted under the fixed plate 10. The rotation axle 13 of the motor is connected with the adjustable arm 14 through a fixed plate 10. For purposes of fixation and compression of the adjustable arm against the fixed plate, the rotation axle has been provided with a captive head 60. In addition, the adjustable arm is provided with a pivot 15 that slides into a control slot in the fixed plate (not shown in figures 6 and 7).

The pivot may advantageously be placed in the middle of the adjustable arm. Once the pivot reaches a stop, a symmetrical momentum will be provided. The valve will twist but the distance from the pivot to the edge of the adjustable arm is small and the twist of the adjustable arm will therefore be limited.

In order to do away with the momentum through the adjustable arm, an extra long screw has been mounted into a bushing on the motor axle. The screw continues from the motor axle through a cut in the adjustable arm and out over the edge of the adjustable arm. The screw is used to stop the motor once it hits a limit switch (not shown in the figures). Thus, the adjustable arm will not be affected by any momentum provided that there is a certain margin between the adjustable arm and the cut.

In order to increase fixation and compression further between the adjustable arm and the fixed plate, the adjustable arm has been provided with a first wedge 61 in the periphery and the fixed plate has been provided with a second reversed wedge 62. When moving the adjustable arm towards the wedge 62 in the fixed plate, the wedges will connect which will cause the adjustable arm to be gradually pressed against the fixed plate.

At the same time, it will be possible to use the wedge construction to define a limit switch for the adjustable arm by monitoring the amount of current used by the motor.

Correspondingly, it will be possible to use two wedges in the fixed plate, each defining an outer point of the adjustable arm. It is also possible to use two wedges in the adjustable arm and one wedge in the fixed plate.

Meanwhile, the shape of the wedges may vary so that the desired property of a given application may be obtained. This includes quite long wedges provided with a minimum drop whereby it is possible to obtain a slow and gradual change in compression between the adjustable arm and the fixed plate over quite a distance. As opposed thereto, certain situations call for quick compression whereby the wedges need to be short and with a big drop.

The movable part of the valve may also be integrated in an existing plate or fixture. All that is required is a couple of holes for passing plus some assembly elements/slots therein. The necessary connecting branch(es) for the hose may subsequently be bolted, glued or otherwise fixed onto the plate/fixture.

A valve according to claims 1-14 used together with a vacuum source in an apparatus used within the graphical business for lifting or controlling sheet formed materials such as paper or paper webs is quite advantageous.

Similarly, a valve according to claims 1-14 may be used together with a vacuum source in an apparatus for lifting or controlling letters or packages such as a post sorting facility.

Further, a valve according to claims 1-14 may be used together with a vacuum source in an apparatus used within the packing business for lifting or controlling a subject by means of one or more suction cups.

It follows that the invention may be used in many other areas of application, including the use of a pressure source instead of a vacuum source.

### List

- 10.: Fixed plate
- 11.: Motor
- 12a, 12b.: Connecting branches
- 13.: Rotation axle
- 14.: Adjustable arm
- 15.: Control slot
- 16.: Pivot
- 17.: Connecting branch
- 20.: Fixed circular plate
- 21.: Motor
- 22a - 22h.: Connecting branches
- 23.: Rotation axle
- 24.: Adjustable arm
- 27, 27a, 27b.: Connecting branch
- 28.: Adjustable arm
- 40a-40c.: Adjustable arms
- 41a-41c.: Hose
- 42a-42c.: Pivot
- 43a-43c.: Rotation axle
- 44a-44c.: Connecting branches
- 45a-45c.: Motors
- 46.: Fixed plate
- 47.: Vacuum generator
- 50.: Motor control unit
- 60.: Captive head
- 61.: First wedge
- 62.: Second reversed wedge

## Claims

1. A valve comprising
a first part (14, 24) comprising at least one plane surface with one or more transverse openings (17, 27, 27a-b),
a second part (10, 20) comprising at least one plane surface with one or more transverse openings (12a-b, 22a-h),
wherein the plane surfaces of said first and second parts are facing each other and are in contact while at least said first part is movable, and
wherein the movement of said first part in relation to said second part takes place by an essentially mutually parallel movement between the surfaces, and
wherein an opening in said first part may be placed directly over at least one opening in said second part.

2. A valve according to claim 1 **characterized by** the openings in said first part (14, 24) and said second part (10, 20) each being provided with a connecting branch for connection with a hose (41a-c).

3. A valve according to claim 2 **characterized by** one or more of said hoses from either said first or the second part being connected with a vacuum source (47).

4. A valve according to claim 2 **characterized by** one or more of said hoses from either said first or the second part being connected with a pressure source.

5. A valve according to claim 1 **characterized by** at least one of said first (14, 24) or second (10, 20) parts being provided with at least one means of operation.

6. A valve according to claim 5 **characterized by** at least one of said means of operation constituting a spring.

7. A valve according to claim 5 **characterized by** at least one of said means of operation constituting an electric motor (11, 21, 45a-45c).

8. A valve according to claim 6 or 7 **characterized by** an axle connecting said first part (14, 24) with said means of operation mounted onto said second part (10, 20).

9. A valve according to claim 5 **characterized by** at least said first part being capable of making a partial or full circular movement around an axis.

10. A valve according to claim 1 **characterized by** said first part and said second part being provided with control means for control of the direction of movement and distance.

11. A valve according to claim 10 **characterized by** said first part being provided with a control slot (15) and said second part with a pivot (16, 42a-42c) extending into said control slot or by the first part being provided with a pivot extending into the control slot of the second part.

12. A valve according to claim 11 **characterized by** said pivot (16, 42a-42c) being provided with a captive head (60).

13. A valve according to claim 1 **characterized by** one part having a width of at least that corresponding to the distance between the two openings plus the diameter of these openings.

14. Apparatus comprising a series of valves according to one or more of claims 1-13, each being individually connected with a common vacuum or pressure source.

15. Use of one or more valves according to one or more of claims 1-14 together with a vacuum source in an apparatus used within the graphical business for lifting or controlling sheet formed materials such as paper or paper webs.

16. Use of one or more valves according to one or more of claims 1-14 together with a vacuum source in an apparatus for lifting or controlling letters or packages such as a post sorting facility.

17. Use of one or more valves according to one or more of claims 1-14 together with a vacuum source in an apparatus used within the packing business for lifting or controlling a subject by means of one or more suction cups.
